(19) Europäisches Patentamt
European Patent Office
Office européen des brevets

(11) Publication number: **0 341 623 A2**

(12) # EUROPEAN PATENT APPLICATION

(21) Application number: 89108222.4

(22) Date of filing: 08.05.89

(51) Int. Cl.4: C08L 67/02 , //(C08L67/02, 77:00,63:02,23:02)

(30) Priority: 09.05.88 JP 112141/88

(43) Date of publication of application: 15.11.89 Bulletin 89/46

(84) Designated Contracting States: DE FR GB

(71) Applicant: MITSUBISHI KASEI CORPORATION
5-2, Marunouchi 2-chome Chiyoda-ku
Tokyo 100(JP)

(72) Inventor: Urabe, Hiroshi
1-20-7-201, Minamiikuta Tama-ku
Kawasaki-shi Kanagawa(JP)
Inventor: Ikuhara, Isao
28-6, Umegaoka Midori-ku
Yokohama-shi Kanagawa(JP)

(74) Representative: Vossius & Partner
Siebertstrasse 4 P.O. Box 86 07 67
D-8000 München 86(DE)

(54) **Resin composition.**

(57) A resin composition comprising a blend of:
100 parts by weight of a resin mixture consisting of
(i) 70 to 98% by weight of polybutylene terephthalate, and
(ii) 30 to 2% by weight of a polyamide resin obtained by polymerizing of copolymerizing 100 to 80 parts by weight of monomer component (a) consisting of an aliphatic diamine, isophthalic acid and terephthalic acid, and 0 to 20 parts by weight of monomer component (b) consisting of a lactam and/or an aliphatic and an aliphatic dicarboxylic acid; and
0.01 to 30 parts by weight of (iii) a bisphenol-type epoxy resin which is a product of condensation of a bisphenol with epichlorohydrin and has a polymerization degree of 3 or more.

EP 0 341 623 A2

Xerox Copy Centre

# RESIN COMPOSITION

This invention relates to a novel resin composition. More particularly it is concerned with a resin composition comprising a blend of a resin mixture of (i) polybutylene terephthalate and (ii) a polyamide resin having a specific chemical structure with (iii) a bisphenol-type epoxy resin which is a product of condensation of a bisphenol with epichlorohydrin and, in one embodiment, (iv) a polyolefin which has been modified with an $\alpha,\beta$-unsaturated carboxylic acid or a derivative thereof.

Polybutylene terephthalate has excellent mechanical properties and is being widely used as a useful engineering plastics. On the other hand, polyamide resins are being widely used, owing to their excellent toughness. abrasion resistance and chemical resistance, as useful engineering plastics in the field of molded articles different from those to which the polyester is applied.

Although both polybutylene terephthalate and the polyamide have excellent properties mentioned above. they each have disadvantages.

That is, molded articles of polybutylene terephthalate are very prone to warp, while the polyamide resin suffers considerable changes in physical properties and dimensions due to moisture absorption. For this reason. attempts have been made since a long time ago to improve these disadvantages thereby to produce a material resin with well-balanced physical properties by blending both polymers.

However, the two polymers are poor in compatibility with each other and, hence, the blend thereof undergoes separation into phases during molding due to development of aggregates. Virtually, all the resulting molded articles are extremely poor in mechanical properties.

Under these circumstances, the present inventors have made intensive studies with a view to developing a polyamide resin which has excellent compatibility with polybutylene terephthalate and gives compositions showing excellent mechanical properties. As a result, they have found that a polyamide resin having a specific chemical structure is best suited for the purpose. However, there have been some cases where even the molded articles prepared by the use of such a polyamide show insufficient impact strength, elongation and other properties depending upon the shapes of the products and are difficult to be put to practical use.

It is, therefore, an object of this invention to provide a novel composition which eliminates these disadvantages and shows improved impact resistance and elongation. Another object of the present invention is to provide a resin composition which is excellent in all of mechanical strength, dimensional stability and heat resistance, and hence may advantageously be used as automobile parts, electronic or electrical parts or mechanical parts.

According to the present invention, there is provided a resin composition comprising a blend of: 100 parts by weight of a resin mixture consisting of

(i) 70 to 98% by weight of polybutylene terephthalate, and

(ii) 30 to 2% by weight of a polyamide resin obtained by polymerizing or copolymerizing 100 to 80 parts by weight of monomer component (a) consisting of an aliphatic diamine, isophthalic acid and terephthalic acid, and 0 to 20 parts by weight of monomer component (b) consisting of a lactam and/or an aliphatic diamine and an aliphatic dicarboxylic acid;

0.01 to 30 parts by weight of (iii) a bisphenol-type epoxy resin which is a product of condensation of a bisphenol with epichlorohydrin and has a polymerization degree of 3 or more; and, in one embodiment of this invention,

1 to 40 parts by weight of (iv) a modified polyolefin obtained by modifying a polyolefin consisting mainly of olefin monomer units with an $\alpha,\beta$-unsaturate carboxylic acid or a derivative thereof.

The molecular weight of the polybutylene terephthalate, component (i), in the resin composition of this invention is not especially limited. However, it is preferably such that the intrinsic viscosity [$\eta$], as measured at 30 °C on a 1 g/dl solution of the polymer in a mixed solvent of phenol and tetrachloroethane with a weight ratio of 1:1, is in the range of from 0.5 to 1.3.

The polyamide resins, component (ii), in the resin composition of this invention is a polymer which has a specific chemical structure and has been obtained by polymerizing or copolymerizing 100 to 80 parts by weight of component (a), for forming a halfaromatic polyamide, consisting of an aliphatic diamine, isophthalic acid and terephthalic acid, and 0 to 20 parts by weight of component (b), for forming an aliphatic polyamide, consisting of a lactam and/or an aliphatic diamine, and an aliphatic dicarboxylic acid.

Examples of the aliphatic diamine to be used for preparing the polyamide resin, component (ii), include straight-chain aliphatic diamines such as ethylenediamine, tetramethylenediamine, hexamethylenediamine, octamethylenediamine and decamethylenediamine, and derivatives thereof such as products of methylation, ethylation or halogenation. For polymerization, one or more of such diamines may be used.

Examples of the lactam to be used for preparing the polyamide resin include caprolactam and lauryllactam, and one or more of these may be used for polymerization.

Examples of the aliphatic dicarboxylic acid to be used for preparing the polyamide resin include succinic acid, glutaric acid, adipic acid, pimelic acid, suberic acid, azelaic acid, sebacic acid and derivatives thereof such as products of methylation, ethylation or halogenation. For polymerization, one or more of such dicarboxylic acids may be used.

In preparing the polyamide resin, isophthalic acid and terephthalic acid are used in combination with each other, and the molar ratio of isophthalic acid to terephthalic acid is preferably in the range of from 20:80 to 80:20, more preferably from 60:40 to 80:20.

Further, the component (a) for forming a halfaromatic polyamide occupies at least 80% by weight of the total amount of the components of the polyamide. If the proportion of the component (a) is below 80% by weight, the resulting polyamide shows very poor heat resistance and suffers considerable deterioration in strength due to water absorption.

The polyamide resin constituting part of the resin composition of this invention may generally be prepared by the so-called melt polymerization method in which use is made of a nylon salt, composed of a diamine and a dicarboxylic acid, or an aqueous solution thereof and, according to need, a lactam is added thereto. Alternatively, it may be prepared by solution polymerization or interfacial polymerization depending upon the proportions of isophthalic acid and terephthalic acid. According to need, a chain terminator represented by monocarboxylic acids and monoamines, a heat stabilizer such as phosphate esters, a surfactant, an antifoamer, an antioxidant, an anti-blocking agent or a vehicle can be incorporated in the polymerization system.

The molecular weight of the polyamide in the resin composition of this invention is not especially limited. However, it is preferably such that the relative viscosity, $\eta rel'$ as measured at 25°C on a 1 g/dl solution of the polymer in 98% concentrated sulfuric acid, is in the range of from 1.8 to 3.0.

In the resin mixture of polybutylene terephthalate, i.e., component (i), and the polyamide resin, i.e., component (ii), the proportion of component (i) is 70 to 98% by weight, preferably 80 to 95% by weight, while the proportion of component (ii) is 30 to 2% by weight, preferably 20 to 5% by weight.

If the proportion of the polyamide resin, component (ii), is below 2% by weight, the resulting resin composition is prone to warp, while if it exceeds 30% by weight, the resulting resin composition suffers considerable deterioration in physical properties due to water absorption. In either case, the resulting product processes no merit as a composition.

In the resin composition of this invention, a bisphenol-type epoxy resin, component (iii), has been incorporated, and in one embodiment of this invention a modified polyolefin, component (iv), has also been incorporated, in order to improve the impact resistance and elongation of the resin composition. The bisphenol-type epoxy compound as the component (III) is a product of condensation of a bisphenol with epichlorohydrin, and is a polymer having a polymerization degree of 3 or more, preferably 11 or more, more preferably 15 or more.

This bisphenol-type epoxy compound may be represented by the following general formula, in the case where the bisphenol is, for example, bisphenol A:

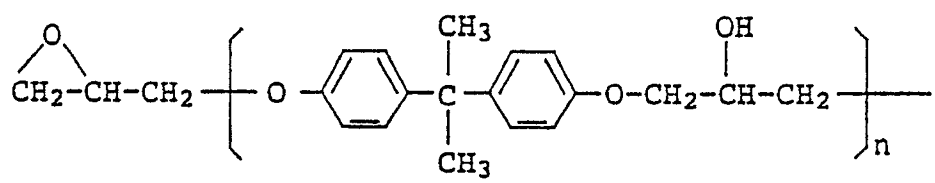

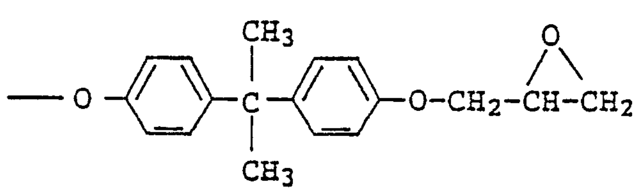

(III)

wherein symbol n is 2 or larger, preferably 11 or larger, more preferably 15 or larger.

As the bisphenols, there may be mentioned, for example, bisphenol A, bisphenol F, bisphenol C,

bisphenol E, tetramethylbisphenol A, tetramethylbisphenol F, diisopropylbisphenol A, di-sec-butylbisphenol A, tetra-tert-butylbisphenol A, tetra-tert-butylbisphenol F, tetra-tert-butylbisphenol, 1,1-ethylidenebisphenol, 1,1-isobutylidenebisphenol, methyl-ethyl-methylenebisphenol, methyl isobutyl-methylenebisphenol, methylhexyl-methylenebisphenol, methyl-phenyl-methylenebis phenol, bisphenol Z, p,p′-bisphenol, methylenebis(2,4-di-tert-butyl-3-cresol), o,p′-bisphenol A, methylpropionatediphenol, ethylpropionatediphenol and tetramethylbisphenol S.

In the resin composition of this invention, the amount of the above-mentioned component (iii), i.e., the bisphenol-type epoxy resin, incorporated is in the range of from 0.01 to 30 parts by weight, preferably from 0.1 to 15 parts by weight, more preferably from 1 to 10 parts by weight, per 100 parts by weight of the resin mixture consisting of the above-mentioned component (i) and component (ii). If the amount is below 0.01 part by weight, the effect of improving impact resistance and elongation cannot be expected. If it exceeds 30 parts by weight, physical properties characteristic of the blend of a polyamide resin and polybutylene terephthalate are impaired.

The above-mentioned component (iv), a modified polyolefin, has been modified with an $\alpha,\beta$-unsaturated carboxylic acid or a derivative thereof. As the $\alpha,\beta$-unsaturated carboxylic acid or its derivative, there may be mentioned, for example, (1) an ethylenically unsaturated mono- or dicarboxylic acid having 3 to 12 carbon atoms, (2) a monocarboxylic acid ester of an alcohol having 1 to 29 carbon atoms, and a mono- or diester of a dicarboxylic acid with said alcohol, and (3) an ethylenically unsaturated dicarboxylic acid anhydride having 1 to 12 carbon atoms.

Examples thereof include methyl methacrylate, butyl acrylate, ethyl acrylate, alkyl esters of acrylic acid or methacrylic acid, maleic acid, maleic anhydride, monoethyl maleate, fumaric acid, monoethyl fumarate, a monoalkyl, having up to 29 carbon atoms, ester of maleic and fumaric acid, glycidyl methacrylate and glycidyl acrylate.

The modified polyolefin is a product of graft polymerization or graft reaction in which the $\alpha,\beta$-unsaturated carboxylic acid or its derivative, as that mentioned above, is grafted on a polymer of an olefin (olefins) such as ethylene, propylene, butene, etc. As examples of such modified polyolefin, there may be mentioned graft products such as ethylene/propylene/g-maleic anhydride ( "g" means "graft") ; ethylene/butene/g-maleic anhydride; ethylene/methyl acrylate/methacrylic acid; ethylene/ vinyl acetate/methacrylic acid; ethylene/propylene/1,4-hexadiene/g-maleic anhydride; ethylene/propylene/norbornadiene/g-maleic anhydride; ethylene/propylene/tetrahydroindene/g-fumaric acid; ethylene/glycidyl methacrylate; ethylene/vinyl acetate/glycidyl methacrylate; ethylene/propylene/g-tetrahydrofurfuryl methacrylate; ethylene/butyne/g-tetrahydrofurfuryl methacrylate; ethylene/propylene/g-maleic anhydride/g-tetrahydrofurfuryl methacrylate; ethylene/butene/g-maleic anhydride/g-tetrahydrofurfuryl methacrylate.

Of these, preferred are those obtained by grafting maleic anhydride on polyolefins, and more preferred are those obtained by grafting maleic anhydride on a copolymer of ethylene and propylene or butene.

The amount of the $\alpha,\beta$-unsaturated carboxylic acid or its derivative grafted on the polyolefin is preferably in the range of from 0.01 to 2% by weight based on the total amount of the modified polyolefin.

The modified polyolefin in the resin composition of this invention preferably has moderate flexibility, because such a polyolefin shows a considerable impact resistance-improving effect. Hence, the bending modulus of the modified polyolefin is desirably in the range of from 100 to 15,000 $kg/cm^2$, preferably from 200 to 8,000 $kg/cm^2$.

The amount of the above-mentioned modified polyolefin, component (iv), incorporated in the resin composition of this invention is in the range of from 1 to 40 parts by weight, preferably from 1.5 to 25 parts by weight, more preferably from 1.5 to 20 parts by weight, per 100 parts by weight of the resin mixture consisting of component (i) and component (ii). If this amount is below 1 part by weight, the resulting resin composition is not sufficiently improved in impact resistance and electrical properties. If it exceeds 40 parts by weight, there is a possibility that physical properties characteristic of the resin mixture of the polyamide resin and polybutylene terephthalate are impaired.

Besides the above-mentioned components, various known additives may be incorporated in the resin composition of this invention according to need. For example, the following may be incorporated: reinforcing materials such as glass fibers, carbon fibers and metal whiskers; fillers such as silica, alumina, a silica-alumina clay mineral, a silica-magnesium clay mineral, calcium silicate, calcium carbonate, asbestos and carbon black; and other additives such as a lubricant, a nucleating agent, an antioxidant, a flame retardant, an antistatic agent and a weathering stabilizer.

The resin composition of this invention may be prepared by melt-blending the above-mentioned components (i), (ii) and (iii), and component (iv) when needed, and further, various additives according to need. The melt-blending may be performed in a usual way. As a blending machine, there may be

employed, for example, an extruder, a Banbury mixer, a super mixer, a roll mill or a kneader. An advantageous method is to melt-blend the components by means of an extruder while the components is being heated at a temperature between 220 and 300 °C.

For the melt-blending of the necessary components, the order of mixing is not especially limited, and any method can be employed, such as a method in which components (ii) and (iii) and, when needed, component (iv) are blended and the resulting blend is mixed with component (i); a method in which components (i), (ii) and (iii) and, when needed, component (iv) are blended all together at a time; or other methods.

As explained above and as will be demonstrated by the examples given below, the resin composition of the present invention has improved tensile elongation and impact strength, with the preferred properties, characteristic of the thermoplastic polyester resin and the polyamide resin having a specific chemical structure, not impaired. Therefore, the resin composition can be suitably used as various automobile parts, electronic or electrical parts and mechanical parts, and, hence, the industrial effect brought about by the present invention is extremely significant.

The present invention will now be illustrated in more detail with reference to the following examples, which should not be construed to be limiting the scope of the invention.

In the Examples and Comparative Examples, the properties of resins and compositions were evaluated according to the following methods.

(1) Relative Viscosity of Polyamide:
Using 98% concentrated sulfuric acid, a solution having a polyamide concentration of 1 g/dl is prepared, and a measurement is made on the solution at 25 °C.

(2) Intrinsic Viscosity of Polybutylene Terephthalate:
Using a mixed solvent composed of phenol and tetrachloroethane with the weight ratio of 1:1, a solution having a polybutylene terephthalate concentration of 1 g/dl is prepared, and a measurement is made on the solution at 30 °C.

(3) Tensile Properties:
According to ASTM D 638.

(4) Flexural Properties:
According to ASTM D 790.

(5) Izod Impact Strength:
According to ASTM D 256.

(6) Heat Distortion Temperature:
According to ASTM D 648.

Reference Example 1 [Preparation of Polyamide Resin]

To an aqueous nylon salt solution consisting of the following components:

| | |
|---|---|
| 90% aqueous solution of hexamethylenediamine | 2.28 kg |
| water | 9.0 kg |
| isophthalic acid | 2.10 kg |
| terephthalic acid | 0.84 kg |

was added 11.0 kg of acetic acid. Then, the resulting solution was introduced into a reaction vessel equipped with a stirrer, and $N_2$-replacement was carried out sufficiently. Thereafter, the temperature of the contents was kept increased while the pressure in the reaction system was being adjusted to 3.0 kg/cm², thus distilling off water. When the liquid distilled out had amounted to 8.0 kg, the valve was temporarily closed and the contents in the vessel were kept to be further heated. When the pressure in the system reached 14 kg/cm², the valve was reopened, and then water was kept distilled off until the temperature in the system reached 255 °C while the pressure was being kept at 14 kg/cm². thereafter, the valve was opened, and the system was then evacuated so that the pressure was finally reduced to 500 mmHg. The system was maintained for 2 hours at this pressure. Subsequently, a molten polymer was taken out from the bottom of the reaction vessel under the pressure of $N_2$, and formed into chips. The relative viscosity, $\eta_{rel}'$ of this polymer was 2.18.

Reference Example 2 [Preparation of Modified Polyolefin Resin]

In a Henschel mixer, 100 parts of an ethylenebutene-1 copolymer having a crystallinity of 20%, an MI of 3.6 and a butene-1 content of 14 mol% was blended with 0.025 part of α,α-bis-t-butylperoxy-p-diisopropylbenzene dissolved in a small amount of acetone, and 0.5 part of maleic anhydride. The resulting blend was extruded at 230° C by means of an extruder having an inner diameter of 40 mm and an L D ratio of 28, and then pelletized to obtain a modified ethylene copolymer in the form of pellets.

Part of the above-obtained pellets were powdered, and the maleic anhydride remaining unreacted was extracted with acetone from the powdered polymer for 12 hours using a Soxhlet extractor. The resulting polymer was dried and then press-molded. The maleic anhydride in the polymer was determined by infrared spectroscopic analysis, and it was found that 0.43% by weight maleic anhydride had been graft-polymerized.

Examples 1 to 8 and Comparative Examples 1 to 3

The following substances were employed:

As polybutylene terephthalate, use was made of that having an intrinsic viscosity [η] of 1,1 (Examples 1 to 7 and Comparative Examples 1 to 3) and that having a [η] of 0.85 (Example 8);

As a polyamide resin having a specific structure, use was made of the halfaromatic polyamide as obtained in Reference Example 1, which had been prepared from hexamethylenediamine, isophthalic acid and terephthalic acid;

As bisphenol-type epoxy resins, three kinds of resins as shown in Table 1 were used; and

As a modified polyolefin, the modified ethylenebutene copolymer as obtained in Reference Example 2 was used. In each of Examples and Comparative Examples, these substances were mixed in the proportions as shown in Table 1 and melt-blending at a resin temperature of 260° C by means of a twin-screw extruder (PCM-30, manu factured by Ikegai Tekko Co., Ltd.; L D = 25), and then pelletized to obtain a resin composition.

Each of the thus obtained composition was molded into test pieces of various shapes by means of a 2.5-ounce injection molding machine (manufactured by Toshiba Machine Co., Ltd.) under the following conditions: resin temperature, 250° C; mold temperature, 80° C; injection/cooling = 10 seconds/10 seconds cycle.

Using these test pieces, mechanical properties and heat distortion temperatures were measured, and the results obtained are shown in Table 1.

TABLE 1

| | Composition (part by weight) | | | | Tensile | | Flexural | | Izod Impact Strength | | Heat Distortion Temperature |
|---|---|---|---|---|---|---|---|---|---|---|---|
| | PBT | Polyamide | Epoxy resin | polyolefin | Tensile strength (kg/cm²) | Elongation (%) | Blending modulus (kg/cm²) | Blending strength (kg/cm²) | 1/2 inch (kg•cm/cm) | 1/8 inch (kg•cm/cm) | 18.6 kg Load (°C) |
| Example 1 | 90 | 10 | 5 | 0 | 580 | 130 | 25,700 | 800 | 5.8 | 8.1 | 60 |
| " 2 | 90 | 8 | 5 | 2 | 550 | 80 | 24,500 | 850 | 6.9 | 10.1 | 63 |
| " 3 | 90 | 6 | 5 | 4 | 520 | 75 | 23,200 | 800 | 9.0 | 12.4 | 57 |
| Comparative Example 1 | 90 | 10 | 0 | 0 | 580 | 50 | 24,600 | 860 | 5.1 | 8.0 | 60 |
| Example 4 | 80 | 20 | 5 | 0 | 600 | 100 | 25,800 | 910 | 5.6 | 7.9 | 65 |
| " 5 | 80 | 16 | 5 | 4 | 530 | 130 | 23,300 | 830 | 8.5 | 12.0 | 60 |
| " 6 | 80 | 20 | 7 | 0 | 610 | 110 | 25,700 | 900 | 5.9 | 8.0 | 64 |
| Comparative Example 2 | 80 | 20 | 0 | 0 | 610 | 60 | 23,100 | 850 | 6.0 | 8.0 | 65 |
| Example 7 | 80 | 20 | 5 | 0 | 610 | 110 | 23,200 | 850 | 6.3 | 8.1 | 65 |
| Comparative Example 3 | 80 | 20 | 5 | 0 | 610 | 11 | 23,000 | 840 | 5.2 | 7.8 | 63 |
| Example 8 | 90 | 5 | 5 | 5 | 520 | 35 | 23,500 | 800 | 8.5 | 11.5 | 60 |

(1): A bisphenol A-type epoxy resin having a polymerization degree of 29 and an epoxy equivalent of 4200 eq/g.
(2): A bisphenol F-type epoxy resin having a polymerization degree of 15 and an epoxy equivalent of 2000 eq/g.
(3): A bisphenol A-type epoxy resin having a polymerization degree of 2 and an epoxy equivalent of 450 eq/g.

## Claims

1. A resin composition comprising a blend of:
100 parts by weight of a resin mixture consisting of
(i) 70 to 98% by weight of polybutylene terephthalate, and
(ii) 30 to 2% by weight of a polyamide resin obtained by polymerizing or copolymerizing 100 to 80 parts by weight of monomer component (a) consisting of an aliphatic diamine, isophthalic acid and terephthalic acid, and 0 to 20 parts by weight of monomer component (b) consisting of a lactam and/or an aliphatic and an aliphatic dicarboxylic acid; and
0.01 to 30 parts by weight of (iii) a bisphenol-type epoxy resin which is a product of condensation of a bisphenol with epichlorohydrin and has a polymerization degree of 3 or more.

2. A resin composition according to claim 1, wherein the molar ratio of isophthalic acid to terephthalic acid, both in component (ii), is in the range of from 20:80 to 80:20.

3. A resin composition according to claim 2, wherein the molar ratio of isophthalic acid to terephthalic acid is in the range of from 60:40 tc 80:20.

4. A resin composition according to claim 1, wherein the polymerization degree of said epoxy resin, component (iii), is 11 or more.

5. A resin composition comprising a blend of:
100 parts by weight of a resin mixture consisting of
(i) 70 to 95% by weight of polybutylene terephthalate, and
(ii)30 to 5% by weight of a polyamide resin obtained by polymerizing or copolymerizing 100 to 80 parts by weight of monomer component (a) consisting of an aliphatic diamine, isophthalic acid and terephthalic acid, and 0 to 20 parts by weight of monomer component (b) consisting of a lactam and/or an aliphatic diamine, and an aliphatic dicarboxylic acid;
0.01 to 30 parts by weight of (iii) a bisphenol-type epoxy resin which is a product of condensation of a bisphenol with epichlorohydrin and has a polymerization degree of 3 or more; and
.1 to 40 parts by weight of (iv) a modified polyolefin obtained by modifying a polyolefin consisting mainly of olefin monomer units with an $\alpha,\beta$-unsaturated carboxylic acid or a derivative thereof.

6. A resin composition according to claim 5, wherein the molar ratio of isophthalic acid to tere phthalic acid, both in component (ii), is in the range of from 20:80 to 80:20.

7. A resin composition according to claim 5, wherein the molar ratio of isophthalic acid to terephthalic acid is in the range of from 60:40 to 80:20.

8. A resin composition according to claim 5, wherein the polymerization degree of said epoxy resin, component (iii), is 11 or more.

9. A resin composition according to claim 5, wherein said $\alpha,\beta$-unsaturated carboxylic acid or its derivative is maleic anhydride.